# EUROPÄISCHE PATENTSCHRIFT

(11) **EP 3 590 695 B1**
(45) Veröffentlichungstag und Bekanntmachung des Hinweises auf die Patenterteilung: **06.03.2024**
(21) Anmeldenummer: 19176674.0
(22) Anmeldetag: 27.05.2019
(51) Int. Cl.: B29D 30/06

(54) **VULKANISATIONSEINHEIT MIT MINDESTENS EINEM FORMTRÄGER SOWIE VERWENDUNG UND VERFAHREN ZUM VULKANISIEREN EINES FAHRZEUGREIFENS**
VULCANISATION UNIT COMPRISING AT LEAST ONE MOULD CARRIER AND USE AND METHOD FOR VULCANISING A TYRE FOR A VEHICLE
UNITÉ DE VULCANISATION DOTÉE D'AU MOINS UN SUPPORT DE MOULE AINSI QU'UTILISATION ET PROCÉDÉ DE VULCANISATION D'UN PNEU DE VÉHICULE

(30) Priorität: 04.07.2018 DE 102018210978
(43) Veröffentlichungstag der Anmeldung: 08.01.2020
(73) Patentinhaber: Continental Reifen Deutschland GmbH, 30165 Hannover (DE)
(72) Erfinder: Krohne, Holger, 30165 Hannover (DE); Möller, Gracjana, 30165 Hannover (DE); Harisch, Ralph, 30165 Hannover (DE)
(74) Vertreter: Continental Corporation

(56) Entgegenhaltungen:
- EP-A1- 2 000 290
- EP-A1- 3 153 311
- CN-A- 103 538 188
- CN-A- 108 016 057
- DE-A1- 4 439 180
- DE-A1-102012 107 509
- DE-A1-102012 108 803
- JP-A- H07 195 370
- US-A1- 2012 074 133
- US-A1- 2013 284 336

## Beschreibung

Die Erfindung betrifft eine Vulkanisationseinheit umfassend mindestens einen Formträger, wobei der Formträger mindestens eine regelbare Heizeinheit umfasst und mindestens eine Vulkanisationsform, wobei die Vulkanisationsform mindestens ein seitliches Formgebungselement umfasst. Die Erfindung betrifft auch ein Verfahren zum Vulkanisieren eines Fahrzeugreifens sowie die Verwendung mindestens einer regelbaren Heizeinheit in einer Vulkanisationseinheit. Die Reifenvulkanisation erfolgt in Heizpressen, bei der der Reifenrohling in einen geeigneten Formträger mit Formgebungselementen und Profileinsätzen eingesetzt und unter Wärme- und/oder Druckeinwirkung von außen und von innen vulkanisiert wird. Auf der Reifenrohlingsinnenseite wird ein flexibler Balg an den Reifen angelegt, der mit einem Heizmedium beaufschlagt wird und auf diese Weise dem Reifenrohling von der Innenseite die notwendige Vulkanisationsenergie zuführt. Die Zuführung der Vulkanisationsenergie über die Reifeninnenseite wird als Innenheizung bezeichnet. Die erforderlichen Vulkanisationstemperaturen und die Vulkanisationsdauer sind von verschiedenen Parametern abhängig, z.B. von dem Reifentyp.

Auf der Reifenrohlingsaußenseite hingegen wird der Reifenrohling über verschiedene Formgebungselemente erwärmt, wobei in der Heizpresse liegende Heizplatten einen Formträger der Vulkanisationsform beheizen und dieser Formträger wiederum die besagten Formgebungselemente beheizt. Die besagten Formgebungselemente können dabei radial äußere oder seitliche Formgebungselemente sein.

Unter bestimmten Bedingungen besteht das Problem unerwünscht hoher oder unerwünscht tiefer Temperaturen in bestimmten Reifenteilen. Hierdurch können die Reifenteile durch die abweichenden Temperaturen und Vulkanisationszeiten zu stark oder zu wenig vernetzt werden, wodurch die Produktqualität und Reifeneigenschaften beeinträchtigt werden können. Dies gilt insbesondere für Reifenteile der Seitenwand oder des Reifenwulstes.

Im Stand der Technik ist das Vulkanisierungsverfahren allgemein bekannt:
DE 102014203253 A1 offenbart beispielsweise ein "Verfahren zum Vulkanisieren eines Rohreifens in einer Heizpresse mit einer mehrteiligen Vulkanisationsform, welche Seitenwandschalen, Wulstringe und einen aus einer Anzahl von in radialer Richtung bewegbaren Segmentschuhen mit gehalterten Profilsegmenten zusammengesetzten Segmentring aufweist und wobei eine Außenheizung vorgesehen ist, welche Heizkammern zur Erwärmung des Segmentringes und Heizkammern zur Erwärmung der unteren Seitenwandschale samt unterem Wulstring und der oberen Seitenwandschale samt oberem Wulstring aufweist" (siehe Anspruch 1).

EP 3 153 311 A1 offenbart ein Gerät zum Vulkanisieren eines Reifens, das aus einem Seitenformteil, das mit einer Seitenformfläche zur Formung der Außenfläche eines Seitenwandteils des Reifens versehen ist, und einer Fläche, die der Seitenformfläche gegenübersteht und nicht zur Formgebung dient, und einem Heizteil zur Vulkanisierung des Rohreifens besteht, der unmittelbar am Seitenformteil abgestellt ist, um den Rohreifen von der Seite der Fläche, die nicht zur Formgebung dient, auf die Seitenformfläche zu erhitzen, wobei das Seitenformteil mit einem Durchflusspfad versehen ist, der aus einem Zufuhrportionsteil, der mit einer ersten Flüssigkeit beliefert wird, deren Temperatur unter der Vulkanisationstemperatur des Rohreifens liegt, einem Ableitport für die Ableitung der ersten Flüssigkeit und einem Hauptteil besteht, der sich zwischen dem Zugangshafen und dem Teil des Entladehafens erstreckt (vgl. Anspruch 1).

Absätze [0021 bis 0023] offenbaren einen ersten Heizer J1 in einer ersten Ausführungsform, welcher zum Heizen mit gesättigtem Wasserdampf bei beispielsweise 200 °C und 1,5 MPa Druck durchströmt werden kann.

DE 102012108803 A1, Absatz [0021] offenbart eine Heizform umfassend den "oberen und unteren Wulstring 2, die obere und untere Seitenwandschale 3 und die Profilsegmente 4. Die Heizform 1 liegt auf seiner Innenseite direkt an dem Reifenrohling an und führt ihm Vulkanisationsenergie in Form von Wärme zu. Der Wulstring 2 und die Seitenwandschalen 3 weisen jeweils autarke Wärmequellen 5 und 6 auf (s. [0021]).

DE 102012107509 A1, Absatz [0020] beschreibt wie in "der unteren Containerplatte 13 [...] eine weitere Dampfkammer 14 angeordnet" ist und die "Dampfkammer 14 [...] über die Wärmebrücke 15 mit dem benachbarten Vulkanisationssegment in Form der unteren Seitenschale 18 verbunden" ist. Mit der Seitenschale 18 werde im Wesentlichen die Seitenwände des Reifenrohlings beheizt (s. Absatz [0020], zweiter Satz).

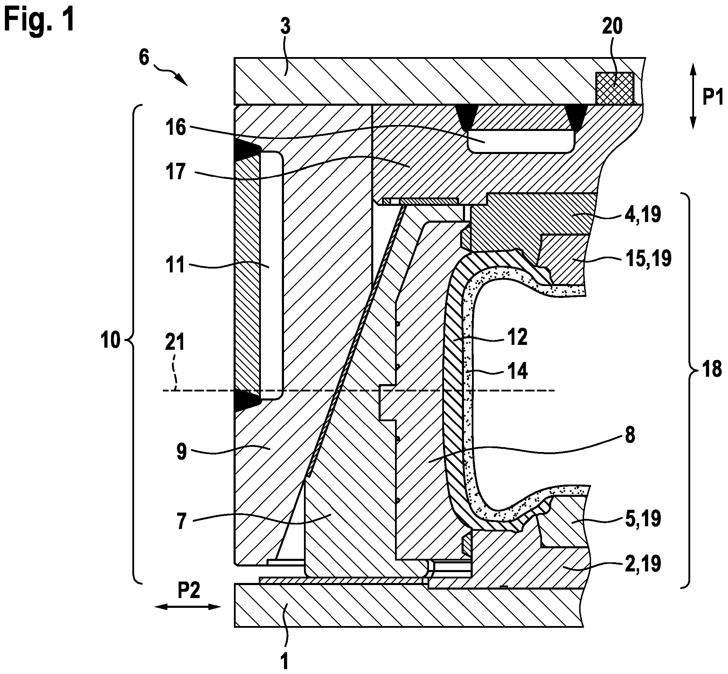

US 2013/284336 A1, Figur 1 umfasst den folgenden Ausschnitt:

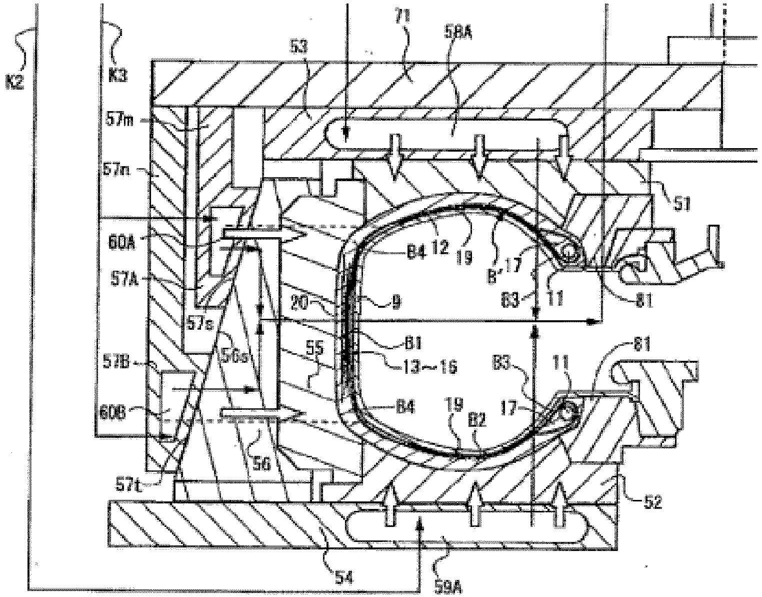

Gezeigt sind in Figur 1 zwei "first heating means" mit den Strömungskanälen 57A und 58A, welche gemäß Absatz [0086] auch in noch kleinere, aber zahlreichere (d.h. mehr als zwei) Einheiten unterteilt werden kann, um eine bessere Temperaturkontrolle für den Laufstreifenbereich 31 zu erreichen.

JP H07 195370 A offenbart wie die Seitenfläche eines Reifens 21 in seitlicher Richtung in einer ersten Form 18 vulkanisiert wird, sodass er eine vorbestimmte Form annimmt, und die Außenfläche des Reifens 21 in ihrer Radialrichtung in einer zweiten Form 12 vulkanisiert wird, um eine vorbestimmte Form zu erhalten (vgl. Abstract). [...] Darüber hinaus wird durch die Lieferung einer Hochtemperatur-Heizflüssigkeit an die dritten Heizmittel 38 der ersten Form 18 durch einen Heizmitteldurchgang 98, ein großer Wulstteil 21A in der Kautschukmischung schnell auf hohe Temperatur erwärmt (vgl. Abstract).

EP 2 000 290 A1, Absätze [0005] und [0006] offenbaren eine Vorrichtung zur Vulkanisation eines Fahrzeugreifens mit einer Heizform, wobei "eine Wärmeisolierung einen Bereich zwischen der Innenheizung und der Seitenschale der Heizform thermisch entkoppelt", welche "zwischen Innenheizung und den Seitenschalen [...] eine thermische Entkopplung des äußeren Wulstbereichs von der Innenheizung" realisiert ist. Dadurch werde die Temperaturen des äußeren Wulstbereichs abgesenkt und nur noch über die Außenheizung bestimmt und die Isolierung ermögliche so eine gezielte Temperaturführung des Reifens (vgl. Absatz [0006]).

Die US 2012/074133 A1 beschreibt eine Formheizvorrichtung zum Heizen einer Reifenform, die einen Reifen aufnimmt. Zum Heizen sind Heizeinheiten beschrieben die die Form erhitzen. Ferner ist eine Temperatursteuerung offenbart, wobei die Temperatursteuerung ein Signal zum Steuern einer Ausgabe einer Hochfrequenzenergieversorgung ausgibt, wenn die durch den Temperatursensor erfasste Temperatur eine vorbestimmte Temperatur erreicht, wodurch eine Temperatursteuerung durchgeführt wird, um die Reifenform M auf einer konstanten Temperatur zu halten.

Der Erfindung liegt die Aufgabe zu Grunde, eine Vorrichtung zur Vulkanisation eines Fahrzeugreifens bereitzustellen, bei dem der Fahrzeugreifen mit einer hohen Produktqualität und verbesserten Reifeneigenschaften erzeugt wird.

Eine weitere Aufgabe besteht darin, die Vulkanisationszeit insgesamt zu verkürzen, um dadurch die Anzahl der vulkanisierten Reifen pro Vulkanisationspresse zu erhöhen. Eine weitere Aufgabe besteht darin, die Vorbereitungszeit nach Stillstand zu verkürzen, um dadurch die Anzahl der vulkanisierten Reifen pro Zeiteinheit zu erhöhen und eine höhere Reifenausbeute zu erzielen. Solche Vorbereitungszeiten entstehen bei einem vorübergehenden Stillstand der Vulkanisationseinheit aufgrund von Balgwechsel, Formreinigung oder neuen Anläufen anderer Reifentypen.

Gelöst wird diese Aufgabe erfindungsgemäß durch eine Vulkanisationseinheit umfassend
- mindestens einen Formträger und
- mindestens eine Vulkanisationsform, wobei die Vulkanisationsform mindestens ein seitliches Formgebungselement umfasst,
dadurch gekennzeichnet, dass
- der Formträger mindestens eine regelbare Heizeinheit umfasst
   und
- die eine regelbare Heizeinheit im Formträger dazu ausgelegt ist, das eine oder das mindestens eine seitliche Formgebungselement zu beheizen.

Die Lösung der umfangreichen Aufgabenstellung wie vorstehend beschrieben konnte überraschenderweise erreicht werden, indem eine regelbare Heizeinheit so im Formträger integriert wird, dass sie ein seitliches Formgebungselement des Formträgers regelbar beheizen kann. Dies hat zum einen den Vorteil, dass der Abstand zwischen dem Heizelement und dem zu vulkanisierenden Reifenrohling kleiner wird und somit eine bessere Temperaturkontrolle des Reifenrohlings, insbesondere der Seitenwand des Reifenrohlings, erreicht werden kann.

Zum zweiten hat eine erfindungsgemäße Vulkanisationseinheit den Vorteil, dass die Mehrheit der besagten regelbaren Heizeinheiten oder optimaler Weise sämtliche regelbaren Heizeinheiten in den Formträger und nicht in die Heizpresse integriert werden und somit eine solche erfindungsgemäße Vulkanisationseinheit in jede beliebige Heizpresse eingebaut werden kann, um einen Reifenrohling zu einem Fahrzeugluftreifen zu vulkanisieren. Dies ist insbesondere dann gegeben, wenn eine erfindungsgemäße Vulkanisationseinheit zusätzlich auch eine regelbare Heizeinheit umfasst, welche dazu ausgelegt ist, mindestens ein radial äußeres Formgebungselement zu beheizen, da bei einer solchen erfindungsgemäßen Vulkanisationseinheit keine Heizelemente mehr in der Heizpresse vorhanden sein müssen und somit die Flexibilität im Anlagenbau erhöht wird. Zu den radial äußeren Formgebungselementen zählen insbesondere der Schließring, der Profileinsatz und der mehrteiligen Segmentschuh einer erfindungsgemäßen Vulkanisationseinheit.

Des Weiteren kann auch eine höhere Anzahl verschiedener Reifentypen mit dem Formträger einer erfindungsgemäßen Vulkanisationseinheit im Vergleich zu bekannten Vulkanisationseinheiten vulkanisiert werden, da die Heizeinheit regelbar ist und somit die gewünschte Wärmeübertragung auf das seitliche Formgebungselement und auch die gewünschte Temperatur in der Seitenwand des zu vulkanisierenden Reifenrohlings angepasst werden kann. Auch dies erhöht die Flexibilität erfindungsgemäßer Vulkanisationseinheiten und spart somit eine beträchtliche Menge an Lagerraum, welche ansonsten durch eine Vielzahl von Heizpresse und/oder Vulkanisationsformen für die verschiedenen Reifentypen belegt werden müsste.

Zudem löst die vorstehend beschriebene erfindungsgemäße Vulkanisationseinheit das im Stand der Technik häufig auftretendes Problem, dass bei Stillstandszeiten keine Wärmeübertragung von der Heizeinheit in der Heizpresse auf den Formträger möglich ist, da die Heizpresse während dieser Stillstandszeit von der Vulkanisationseinheit und somit auch von der Vulkanisationsform und dem Formträger gelöst werden muss. In einer erfindungsgemäßen Vulkanisationseinheit hingegen ist die Heizeinheit bereits im Formträger integriert und es somit möglich auch während der Stillstandszeiten den Formträger und somit auch die seitlichen Formgebungselemente auf einer gewünschten Temperatur zu halten.

Beim Einsatz einer erfindungsgemäßen Vulkanisationseinheit oder einer erfindungsgemäßen Heizpresseneinheit verkürzen sich die Stillstandszeiten daher enorm, welche beispielsweise beim Lösen des vulkanisierten Reifens vom Formträger oder beim Wechseln von der Produktionsserie eines Reifentyps auf die Produktionsserie eines anderen Reifentyps entstehen.

Bevorzugt ist eine erfindungsgemäßen Vulkanisationseinheit wie vorstehend beschrieben oder wie vorstehend als bevorzugt beschrieben, wobei die mindestens eine regelbare Heizeinheit mittels eines Heizmediums Formgebungselemente beheizt.

Das Heizmedium fließt dabei bevorzugt durch die Heizkammer der Heizeinheit und erhitzt die Wände der Heizeinheit und führt so ihre erfindungsgemäße Verwendung aus. Das Heizmedium ist dabei bevorzugt ein Fluid umfassend Stoffe wie Luft, Stickstoff, Wasser, Wasserdampf oder einer Mischung daraus, besonders bevorzugt umfasst das Heizmedium Wasserdampf. Bevorzugt besteht das Heizmedium hauptsächlich oder gänzlich aus Luft, Stickstoff, Wasser, Wasserdampf oder einer Mischung daraus, besonders bevorzugt aus Wasserdampf. Das Heizmedium wird bevorzugt mit einer ausreichenden Fließgeschwindigkeit durch die regelbare Heizeinheit geströmt. Eine solche regelbare Heizeinheit ist regelbar, da die gewünschte Wärmeübertragung vom Heizmedium durch die Temperatur des Heizmediums oder durch die Fließgeschwindigkeit des Heizmediums durch die Heizkammer der Heizeinheit geregelt werden kann. Mit einer solchen Heizeinheit einer erfindungsgemäßen Vulkanisationseinheit können besonders hohe Wärmen übertragen werden und eine besonders präzise Temperatureinstellung an dem seitlichen Formgebungselement oder an der Seitenwand erreicht werden.

Im Rahmen der vorliegenden Erfindung umfasst der Ausdruck "Vulkanisationseinheit" zumindest den Formträger und die Vulkanisationsform. Der Formträger umfasst dabei bevorzugt der obere formoberseitige Formträger, die Heizkammer und den Schließring. Die Vulkanisationsform umfasst dabei bevorzugt seitlichen Formgebungselemente sowie den Profileinsatz.

Im Rahmen der vorliegenden Erfindung bedeutet der Ausdruck "in Wärmekontakt" zwischen den Gegenständen A und B, dass eine Temperaturänderung des Gegenstandes A auch eine Temperaturänderung des Gegenstandes B hervorruft. Der Wärmekontakt kann entweder
- direkt sein, d.h. ohne dass dazu die Temperatur eines weiteren Gegenstandes geändert werden muss,
   oder
- indirekt sein, sodass zur Temperaturänderung des Gegenstandes B zuerst die Temperatur eines weiteren Gegenstandes geändert werden muss.

Im Rahmen der vorliegenden Erfindung bedeutet der Ausdruck "in direktem Kontakt" zwischen den Gegenständen A und B, dass mindestens eine Fläche des Gegenstandes A in physischem Kontakt mit mindestens einer Fläche des Gegenstandes B steht, wobei die beiden sich kontaktierenden Flächen dort eine Kontaktfläche zwischen dem Gegenstand A und dem Gegenstand B bilden, an dem eben dieser physische Kontakt der Fläche des Gegenstandes A mit der Fläche des Gegenstandes B besteht.

Bevorzugt ist eine Vulkanisationseinheit wie vorstehend beschrieben oder wie vorstehend als bevorzugt beschrieben, wobei der mindestens eine Formträger drei oder mindestens drei regelbare Heizeinheiten aufweist, wobei die drei oder die mindestens drei regelbaren Heizeinheiten bevorzugt eine Heizplatte und/oder mindestens eine Zonenheizung aufweisen. Besonders bevorzugt weist der mindestens eine Formträger genau zwei Zonenheizungen auf.

Bevorzugt ist eine Vulkanisationseinheit wie vorstehend beschrieben oder wie vorstehend als bevorzugt beschrieben, wobei das eine seitliche Formgebungselement des mindestens einen seitlichen Formgebungselement oder das mindestens eine seitliche Formgebungselement genau ein formoberseitiges Formgebungselement ist.

Bevorzugt ist eine Vulkanisationseinheit wie vorstehend beschrieben oder wie vorstehend als bevorzugt beschrieben, wobei
- die Vulkanisationseinheit mindestens zwei seitliche Formgebungselemente aufweist, wobei bevorzugt die Vulkanisationseinheit mindestens einen Wulstring und mindestens eine Seitenwandschale aufweist
   und/oder
- die zwei seitlichen Formgebungselemente des mindestens einen seitlichen Formgebungselements formoberseitige Formgebungselemente sind.

Im Rahmen der vorliegenden Erfindung weist eine Vulkanisationsform einer erfindungsgemäßen Vulkanisationseinheit eine Vulkanisationsformoberseite und eine Vulkanisationsformunterseite auf und somit bedeutet der Ausdruck "formoberseitiges Element", dass das Element innerhalb der Vulkanisationsformoberseite liegt und der Ausdruck "formunterseitiges Element", dass das Element innerhalb der Vulkanisationsformunterseite liegt. Die Vulkanisationsformoberseite ist dabei der Teil der Vulkanisationseinheit der beim Vulkanisieren oberhalb des Reifens liegt. Die Vulkanisationsformunterseite ist dabei der Teil der Vulkanisationseinheit der beim Vulkanisieren unterhalb des Reifens liegt.

Bevorzugt ist eine Vulkanisationseinheit wie vorstehend beschrieben oder wie vorstehend als bevorzugt beschrieben, wobei zumindest ein Teil einer Fläche der Heizeinheit in Wärmekontakt steht mit einer Fläche des seitlichen Formgebungselements, wobei bevorzugt mindestens ein Teil einer Fläche der Heizeinheit in direktem Kontakt steht mit einer Fläche des seitlichen Formgebungselements und somit eine Kontaktfläche zum seitlichen Formgebungselement bildet.

Ein Vorteil des vorstehend beschriebenen Aspekts der vorliegenden Erfindung ist, dass durch direkten Kontakt eine noch bessere und schnellere Temperatureinstellung erreicht werden kann.

Bevorzugt ist eine Vulkanisationseinheit wie vorstehend beschrieben oder wie vorstehend als bevorzugt beschrieben, wobei der zumindest eine Teil der Fläche der Heizeinheit oder die Kontaktfläche eine Größe im Bereich von 1 cm² bis 10000 cm² aufweist, bevorzugt im Bereich von 10 cm² bis 1000 cm².

Bevorzugt ist eine Vulkanisationseinheit wie vorstehend beschrieben oder wie vorstehend als bevorzugt beschrieben, wobei an einer, zwei, drei, vier oder fünf der Seiten oder der Mehrheit der Seiten oder sämtlicher Seiten der mindestens einen regelbaren Heizeinheit ein Trennmaterial zur Wärmeisolierung angebracht ist, wobei die eine, zwei, drei, vier oder fünf der Seiten keine Kontaktfläche zum seitlichen Formgebungselement umfassen.

Ein Vorteil des vorstehend beschriebenen Aspekts der vorliegenden Erfindung ist, dass somit weniger Wärmeenergie über die Seiten der Heizeinheit verloren geht, welche die nicht dazu vorgesehen sind, die radial äußeren oder seitlichen Formgebungselemente einer erfindungsgemäßen Vulkanisationseinheit zu erwärmen.

Bevorzugt ist eine Vulkanisationseinheit wie vorstehend beschrieben oder wie vorstehend als bevorzugt beschrieben, wobei die regelbare Heizeinheit eine regelbare Heizplatte ist und die Heizfläche der Heizplatte größer ist als die anliegende Fläche des seitlichen Formgebungselements. Die Gesamtfläche der Flächen der Heizplatte weist eine Größe im Bereich von 1 cm² bis 10000 cm² auf, bevorzugt im Bereich von 10 cm² bis 1000 cm².

Ein Vorteil des vorstehend beschriebenen Aspekts der vorliegenden Erfindung ist, dass hierdurch eine bessere Energieeffizienz erreicht wird, da mehr von der Heizfläche der Heizplatte abgestrahlte Wärme auf das mindestens eine seitliche Formgebungselement übergehen kann. Dies gilt insbesondere dann, wenn die Heizplatte und die anliegende Fläche des seitlichen Formgebungselements nicht nur im Wärmekontakt sondern noch besser in direktem Kontakt stehen.

Bevorzugt ist eine Vulkanisationseinheit wie vorstehend beschrieben oder wie vorstehend als bevorzugt beschrieben, wobei die regelbare Heizeinheit eine regelbare Heizplatte ist und die Heizfläche der Heizplatte, welche an das seitliche Formgebungselement anliegt, mindestens 0,1 cm² bis 20 m², bevorzugt im Bereich von 0,25 m² bis 5 m².

In besonders hohem Maße bevorzugt ist eine Vulkanisationseinheit wie vorstehend beschrieben, umfassend
- mindestens einen Formträger , wobei der Formträger mindestens eine regelbare Heizeinheit umfasst,
- mindestens eine Vulkanisationsform, wobei die Vulkanisationsform mindestens ein seitliches Formgebungselement umfasst, wobei die mindestens eine regelbare Heizeinheit dazu ausgelegt ist, das mindestens eine seitliche Formgebungselement zu beheizen,
wobei
- zumindest ein Teil einer Fläche der Heizeinheit in Wärmekontakt steht mit einer Fläche des seitlichen Formgebungselements, wobei mindestens ein Teil einer Fläche der Heizeinheit in direktem Kontakt steht mit einer Fläche des seitlichen Formgebungselements und somit eine Kontaktfläche zum seitlichen Formgebungselement bildet,
- die Kontaktfläche eine Größe im Bereich von 10 cm² bis 1000 cm²,
- an einer der Seiten der mindestens einen regelbaren Heizeinheit ein Trennmaterial zur Wärmeisolierung angebracht ist, wobei die eine Seite keine Kontaktfläche zum seitlichen Formgebungselement umfasst,
- das seitliche Formgebungselement eine Seitenwandschale oder ein Wulstring ist,
- die regelbare Heizeinheit eine regelbare Heizplatte ist und die Heizfläche der Heizplatte größer ist als die anliegende Fläche des seitlichen Formgebungselements,
- die regelbare Heizeinheit eine regelbare Heizplatte ist und die Heizfläche der Heizplatte, welche an das seitliche Formgebungselement anliegt, im Bereich von 0,25 m² bis 5 m² und
- die Vulkanisationseinheit zusätzlich einen Segmentring mit einer Anzahl von in radialer Richtung bewegbaren Segmentschuhen und eine weitere Heizeinheit zur Erwärmung des Segmentringes umfasst, wobei die Segmentschuhe eine Mehrzahl von Profilsegmenten aufweisen.

Die vorstehend beschriebenen vorteilhaften Aspekte einer erfindungsgemäßen Vulkanisationseinheit gelten auch für sämtliche Aspekte einer nachstehend beschriebenen Heizpresseneinheit und die nachstehend diskutierten vorteilhaften Aspekte erfindungsgemäßer Heizpresseneinheiten gelten entsprechend für sämtliche Aspekte einer erfindungsgemäßen Vulkanisationseinheit.

Eine Ausführungsform der Erfindung betrifft eine Heizpresseneinheit umfassend eine Heizpresse und eine Vulkanisationseinheit nach einem der Ansprüche 1-8, wobei die Heizpresse mindestens eine Regeleinheit zur Regelung der Temperatur der einen oder der mindestens einen regelbaren Heizeinheit umfasst, wobei die Regeleinheit bevorzugt nicht innerhalb der Vulkanisationseinheit angeordnet ist.

Es ist vorteilhaft, die Regeleinheit zur Regelung der Temperatur der einen oder der mindestens einen Heizeinheit in der Heizpresse anzubringen, damit die Regeleinheit bei einem Wechsel des Formträgers und/oder der Formgebungselemente nicht gewechselt werden muss und für verschiedene Formträger verwendet werden kann. Bei einem Wechsel des Formträgers müssen so nur die Anschlüsse der Heizeinheit eines neuen Formträgers mit der Regeleinheit in der Heizpresse verbunden werden.

Bevorzugt ist eine Heizpresseneinheit wie vorstehend beschrieben oder wie vorstehend als bevorzugt beschrieben, wobei sämtliche regelbare oder nicht regelbare Heizeinheiten der Heizpresseneinheit im Formträger der Vulkanisationseinheit angebracht sind.

Die vorstehend beschriebenen vorteilhaften Aspekte einer erfindungsgemäßen Vulkanisationseinheit oder einer erfindungsgemäßen Heizpresseneinheit gelten auch für sämtliche Aspekte eines nachstehend beschriebenen Verfahrens zum Vulkanisieren eines Fahrzeugreifens und die nachstehend diskutierten vorteilhaften Aspekte erfindungsgemäßer Verfahren zum Vulkanisieren eines Fahrzeugreifens gelten entsprechend für sämtliche Aspekte einer erfindungsgemäßen Vulkanisationseinheit oder einer erfindungsgemäßen Heizpresseneinheit.

Die Erfindung betrifft auch ein Verfahren zum Vulkanisieren eines Fahrzeugreifens, umfassend die folgenden Schritte:
- Bereitstellen eines Rohlings eines Fahrzeugreifens in einer Vulkanisationseinheit wie in einem der Ansprüche 1-9 definiert,
- Beheizen des Rohlings mit mindestens einer regelbaren Heizeinheit für ein seitliches Formgebungselement der Vulkanisationseinheit
   und
- Weiterverarbeiten des Rohlings zu einem Fahrzeugreifens.

Bevorzugt ist dabei ein Verfahren wie vorstehend beschrieben, umfassend die folgenden Schritte:
- Bereitstellen eines Rohlings eines Fahrzeugreifens in einer Vulkanisationseinheit, bevorzugt in einer Vulkanisationseinheit wie in einem der vorangehenden Ansprüche definiert,
- Beheizen des Rohlings mit mindestens einer regelbaren Heizeinheit für ein seitliches Formgebungselement der Vulkanisationseinheit
   und
- Weiterverarbeiten des Rohlings zu einem Fahrzeugreifens mit Stützelement.

Insbesondere die vorstehend als bevorzugt beschriebenen Fahrzeugluftstreifen mit Stützelement, die mit in den Seitenwänden des Fahrzeugluftstreifens integrierten Stützelementen ausgestattet sind, müssen in den Seitenwänden besonders gut vulkanisiert werden. Das Stützelement trägt im Pannenlauf die Fahrzeuglast für einen begrenzten Zeitraum und muss daher besonders stabil und zuverlässig sein. Vorstehend beschriebene Fahrzeugluftreifen mit einem Stützelement sind beispielsweise SSR-Reifen der Firma Continental.

Die vorstehend beschriebenen vorteilhaften Aspekte einer erfindungsgemäßen Vulkanisationseinheit oder einer erfindungsgemäßen Heizpresseneinheit oder erfindungsgemäßer Verfahren gelten auch für sämtliche Aspekte einer nachstehend beschriebenen Verwendung und die nachstehend diskutierten vorteilhaften Aspekte erfindungsgemäßer Verwendungen gelten entsprechend für sämtliche Aspekte einer erfindungsgemäßen Vulkanisationseinheit oder einer erfindungsgemäßen Heizpresseneinheit oder erfindungsgemäßer Verfahren.

Die Erfindung betrifft auch die Verwendung mindestens einer regelbaren Heizeinheit, zum Regeln der Temperatur in einer Vulkanisationseinheit zum Vulkanisieren eines Fahrzeugreifens, wobei die regelbare Heizeinheit in dem Formträger der Vulkanisationseinheit angeordnet ist, wobei die regelbare Heizeinheit zur Erhitzung eines seitlichen Formgebungselement der Vulkanisationseinheit geeignet ist. Die vorstehend beschriebene mindestens eine Heizeinheit besteht bevorzugt aus einer oder aus zwei Heizeinheiten.

### Figurenbeschreibung:

Es zeigt:
Figur 1 zeigt eine Schnittdarstellung eines Teils einer Reifenvulkanisationsform im geschlossenen Zustand mit einem Reifen

Die in Fig. 1 gezeigte erfindungsgemäße Heizpresseneinheit 6 umfasst eine Heizpresse sowie eine erfindungsgemäße Vulkanisationseinheit mit einem Formträger 10 und mit einer Vulkanisationsform 18, wobei die Heizpresse eine obere Außenheizung 3 und eine untere Außenheizung 1 umfasst.

Zu den Bestandteilen der Heizpresseneinheit 6, die zum Öffnen und Schließen in senkrechter Richtung (Pfeil P1) bewegt werden können, gehören die obere Außenheizung 3 und die untere Außenheizung 1. Der Formträger 10 weist einen Segmentring auf, welcher üblicher Weise aus sieben bis neun ringförmig verlaufenden Segmentschuhen 7 zusammengesetzt ist, welche die formgebenden Profilsegmente, d.h. der Profileinsatz 8, halten.

Die Vulkanisationsform ist eine mehrteilige Form mit seitlichen Formgebungselementen 19, wie den beiden Wulstringen 5, 15 und den beiden Seitenwandschalen 2,4. Die Segmentschuhe 7 werden beim Öffnen der Vulkanisationseinheit radial, d.h. in Fig. 1 in Richtung des Pfeiles P2, auseinander gefahren und geben hierdurch den fertig vulkanisierten Reifen frei. An der Innenseite des gezeigten Segmentschuhes 7 ist ein Profileinsatz 8 erkennbar, welches den profilierten Laufstreifen des Rohreifens 12 formt.

An der oberen Außenheizung 3 ist ein Schließring 9 angeordnet, welcher eine abgeschrägte Innenfläche aufweist, die mit abgeschrägten Außenflächen der Segmentschuhe 7 des Segmentringes derart zusammen wirken, dass beim Schließen der Vulkanisationseinheit die Segmentschuhe 7 in radialer Richtung P2 zum geschlossenen Segmentring zusammengefahren werden.

In der unteren Außenheizung 1, der oberen Außenheizung 3 und im Schließring 9 können zusätzlich Heizeinheiten angeordnet sein, wie beispielsweise die Heizkammer 11 des Schließringes 9 oder die Heizeinheit 16 für die obere Seitenwandschale 4. In der Heizkammer der Heizeinheit wird zumindest ein Heizmedium eingeleitet, insbesondere Sattdampf, d.h. Wasserdampf. Auf diese Weise wird die erfindungsgemäße Vulkanisationseinheit 18 von außen über die Segmentschuhe 7 und die Heizeinheiten 11, 16 beheizt. Hierbei erwärmen in der in Figur 1 gezeigten Heizpresseneinheit die Segmentschuhe 7 bevorzugt den Profileinsatz 8 und die Heizeinheiten 11, 16 erwärmen direkt die obere Seitenwandschale 4 und indirekt den oberen Wulstring 15.

### Bezugszeichenliste

1 untere Außenheizung
2 untere Seitenwandschale
3 obere Außenheizung
4 obere Seitenwandschale
5 unterer Wulstring
6 Heizpresseneinheit
7 mehrteilige Segmentschuhe des Segmentrings
8 Profileinsatz, radial äußere Formgebungselemente, Profilsegmente
9 Schließring
10 Formträger
11 regelbare Heizeinheit im radial äußeren Formträger; radial äußere Heizkammer, in der der Fluss und die Temperatur des Wasserdampfes als Heizmedium geregelt werden kann
12 Rohreifen; Reifenrohling
14 Heizbalg
15 oberer Wulstring
16 regelbare Heizeinheit im formoberseitigen Formträger; formoberseitige Heizkammer, in der der Fluss und die Temperatur des Wasserdampfes als Heizmedium geregelt werden kann
17 form oberseitiger Formträger
18 Vulkanisationsform; Vulkanisationsform mit Rohreifen und Balg
19 seitliches Formgebungselement
20 Regeleinheit zur Regelung der Temperatur der regelbaren Heizeinheit
21 Reifenäquator
P1 Öffnungs- und Schließrichtung der oberen Außenheizung
P2 Öffnungs- und Schließrichtung der Segmentschuhe, radiale Richtung

## Patentansprüche

1. Vulkanisationseinheit umfassend
- mindestens einen Formträger (10) und
- mindestens eine Vulkanisationsform (18), wobei die Vulkanisationsform (18) mindestens ein seitliches Formgebungselement (19) umfasst,
**dadurch gekennzeichnet, dass**
- der Formträger (10) mindestens eine regelbare Heizeinheit (16) umfasst und
- die eine regelbare Heizeinheit (16) im Formträger (10) dazu ausgelegt ist, das eine oder das mindestens eine seitliche Formgebungselement (19) zu beheizen.

2. Vulkanisationseinheit nach Anspruch 1, wobei zumindest ein Teil einer Fläche der Heizeinheit (16) in Wärmekontakt steht mit einer Fläche des seitlichen Formgebungselements (19), wobei bevorzugt mindestens ein Teil einer Fläche der Heizeinheit (16) in direktem Kontakt steht mit einer Fläche des seitlichen Formgebungselements (19) und somit eine Kontaktfläche zum seitlichen Formgebungselement (19) bildet.

3. Vulkanisationseinheit nach Anspruch 2, wobei der zumindest eine Teil der Fläche der Heizeinheit (16) oder die Kontaktfläche eine Größe im Bereich von 1 cm² bis 10000 cm² aufweist, bevorzugt im Bereich von 10 cm² bis 1000 cm².

4. Vulkanisationsform nach Anspruch 2 oder Anspruch 3, wobei an einer, zwei, drei, vier oder fünf der Seiten oder der Mehrheit der Seiten der mindestens einen regelbaren Heizeinheit (16) ein Trennmaterial zur Wärmeisolierung angebracht ist, wobei die eine, die zwei, die drei, die vier oder die fünf Seiten keine Kontaktfläche zum seitlichen Formgebungselement (19) umfassen.

5. Vulkanisationseinheit nach einem der vorangehenden Ansprüche, wobei die Vulkanisationseinheit mindestens zwei seitliche Formgebungselemente (19) aufweist, wobei bevorzugt die Vulkanisationseinheit mindestens einen Wulstring (5, 15) und mindestens eine Seitenwandschale (2, 4) in der Vulkanisationsformoberseite oder in der Vulkanisationsformunterseite aufweist.

6. Vulkanisationseinheit nach einem der vorangehenden Ansprüche, wobei die regelbare Heizeinheit (16) eine regelbare Heizplatte ist und die Heizfläche der Heizplatte größer ist als die anliegende Fläche des seitlichen Formgebungselements (19).

7. Vulkanisationseinheit nach einem der vorangehenden Ansprüche, wobei die regelbare Heizeinheit (16) eine regelbare Heizplatte ist und die Heizfläche der Heizplatte, welche an das seitliche Formgebungselement (19) anliegt, mindestens 0,1 cm² bis 20 m², bevorzugt im Bereich von 0,25 m² bis 5 m².

8. Vulkanisationseinheit nach einem der vorangehenden Ansprüche, wobei die Vulkanisationseinheit zusätzlich einen Segmentring mit einer Anzahl von in radialer Richtung bewegbaren Segmentschuhen (7) und eine weitere Heizeinheit zur Erwärmung des Segmentringes umfasst, wobei die Segmentschuhe (7) eine Mehrzahl von Profilsegmenten aufweisen.

9. Heizpresseneinheit umfassend eine Heizpresse und eine Vulkanisationseinheit nach einem der Ansprüche 1 bis 8, wobei die Heizpresse mindestens eine Regeleinheit (20) zur Regelung der Temperatur der einen oder der mindestens einen Heizeinheit (16) umfasst.

10. Verfahren zum Vulkanisieren eines Fahrzeugreifens, umfassend die folgenden Schritte:
- Bereitstellen eines Rohlings (12) eines Fahrzeugreifens in einer Vulkanisationseinheit wie in einem der vorangehenden Ansprüche definiert,
- Beheizen des Rohlings (12) mit mindestens einer regelbaren Heizeinheit (16) für ein seitliches Formgebungselement (19) der Vulkanisationseinheit
und
- Weiterverarbeiten des Rohlings (12) zu einem Fahrzeugreifens.

11. Verwendung mindestens einer regelbaren Heizeinheit (16), zum Regeln der Temperatur in einer Vulkanisationseinheit zum Vulkanisieren eines Fahrzeugreifens, wobei die regelbare Heizeinheit (16) in dem Formträger (10) der Vulkanisationseinheit angeordnet ist, wobei die regelbare Heizeinheit (16) zur Erwärmung eines seitlichen Formgebungselement (19) einer Vulkanisationseinheit angeordnet ist.

## Claims

1. Vulcanization unit comprising
- at least one mould carrier (10) and
- at least one vulcanization mould (18), the vulcanization mould (18) comprising at least one lateral shaping element (19),
**characterized in that**
- the mould carrier (10) comprises at least one controllable heating unit (16) and
- the one controllable heating unit (16) in the mould carrier (10) is designed to heat the one or the at least one lateral shaping element (19).

2. Vulcanization unit according to Claim 1, at least one part of a surface area of the heating unit (16) being in thermal contact with a surface area of the lateral shaping element (19), preferably at least one part of a surface area of the heating unit (16) being in direct contact with a surface area of the lateral shaping element (19) and consequently forming a contact area with respect to the lateral shaping element (19).

3. Vulcanization unit according to Claim 2, the at least one part of the surface area of the heating unit (16) or the contact area having a size in the range from 1 cm² to 10 000 cm², preferably in the range from 10 cm² to 1000 cm².

4. Vulcanization unit according to Claim 2 or Claim 3, a separating material for heat insulation being attached to one, two, three, four or five of the sides or the majority of the sides of the at least one controllable heating unit (16), the one, two, three, four or five sides not comprising a contact area with respect to the lateral shaping element (19).

5. Vulcanization unit according to one of the preceding claims, the vulcanization unit having at least two lateral shaping elements (19), the vulcanization unit preferably having at least one bead ring (5, 15) and at least one sidewall shell (2, 4) in the upper side of the vulcanization mould or in the underside of the vulcanization mould.

6. Vulcanization unit according to one of the preceding claims, the controllable heating unit (16) being a controllable heating plate and the heating area of the heating plate being larger than the contacted surface area of the lateral shaping element (19).

7. Vulcanization unit according to one of the preceding claims, the controllable heating unit (16) being a controllable heating plate and the heating area of the heating plate that is in contact with the lateral shaping element (19) being at least 0.1 cm² to 20 m², preferably in the range from 0.25 m² to 5 m².

8. Vulcanization unit according to one of the preceding claims, the vulcanization unit additionally comprising a segment ring with a number of segment shoes (7) that are movable in the radial direction and a further heating unit for heating the segment ring, the segment shoes (7) having a plurality of profile segments.

9. Heating-press unit comprising a heating press and a vulcanization unit according to one of Claims 1 to 8, the heating press comprising at least one closed-loop control unit (20) for controlling the temperature of the one or the at least one heating unit (16).

10. Method for vulcanizing a vehicle tyre, comprising the following steps:
- providing a blank (12) of a vehicle tyre in a vulcanization unit as defined in one of the preceding claims,
- heating the blank (12) with at least one controllable heating unit (16) for a lateral shaping element (19) of the vulcanization unit
and
- further processing the blank (12) to form a vehicle tyre.

11. Use of at least one controllable heating unit (16) for controlling the temperature in a vulcanization unit for vulcanizing a vehicle tyre, the controllable heating unit (16) being arranged in the mould carrier (10) of the vulcanization unit, the controllable heating unit (16) being arranged for heating a lateral shaping element (19) of a vulcanization unit.

## Revendications

1. Unité de vulcanisation, comprenant
- au moins un support de moule (10) et
- au moins un moule de vulcanisation (18), le moule de vulcanisation (18) comprenant au moins un élément de formage latéral (19),
**caractérisé en ce que**
- le support de moule (10) comprend au moins une unité de chauffage (16) régulable et
- l'une des unités de chauffage (16) régulables dans le support de moule (10) est conçue pour chauffer l'un ou l'au moins un élément de formage latéral (19).

2. Unité de vulcanisation selon la revendication 1, au moins une partie d'une surface de l'unité de chauffage (16) étant en contact thermique avec une surface de l'élément de formage latéral (19), de préférence au moins une partie d'une surface de l'unité de chauffage (16) étant en contact direct avec une surface de l'élément de formage latéral (19) et forme ainsi une surface de contact avec l'élément de formage latéral (19).

3. Unité de vulcanisation selon la revendication 2, l'au moins une partie de la surface de l'unité de chauffage (16) ou la surface de contact ayant une taille dans la plage de 1 cm² à 10 000 cm², de préférence dans la plage de 10 cm² à 1 000 cm².

4. Moule de vulcanisation selon la revendication 2 ou la revendication 3, un matériau de séparation destiné à l'isolation thermique étant appliqué sur un, deux, trois, quatre ou cinq des côtés ou de la majorité des côtés de l'au moins une unité de chauffage (16) régulable, l'un, les deux, les trois, les quatre ou les cinq côtés ne comprenant pas de surface de contact avec l'élément de formage latéral (19).

5. Unité de vulcanisation selon l'une des revendications précédentes, l'unité de vulcanisation comprenant au moins deux éléments de formage latéraux (19), de préférence l'unité de vulcanisation comprenant au moins un anneau de talon (5, 15) et au moins une coque de paroi latérale (2, 4) dans la face supérieure du moule de vulcanisation ou dans la face inférieure du moule de vulcanisation.

6. Unité de vulcanisation selon l'une des revendications précédentes, l'unité de chauffage (16) régulable étant une plaque chauffante régulable et la surface chauffante de la plaque chauffante étant supérieure à la surface adjacente de l'élément de formage latéral (19).

7. Unité de vulcanisation selon l'une des revendications précédentes, l'unité de chauffage (16) régulable étant une plaque chauffante régulable et la surface chauffante de la plaque chauffante qui est en contact avec l'élément de formage latéral (19) étant au moins de 0,1 cm² à 20 m², de préférence dans la plage de 0,25 m² à 5 m².

8. Unité de vulcanisation selon l'une des revendications précédentes, l'unité de vulcanisation comprenant en plus un anneau segmenté comportant un certain nombre de patins à segment (7) mobiles dans la direction radiale et une unité de chauffage supplémentaire destinée à chauffer l'anneau segmenté, les patins à segment (7) possédant une pluralité de segments profilés.

9. Unité de presse chauffante comprenant une presse chauffante et une unité de vulcanisation selon l'une des revendications 1 à 8, la presse chauffante comportant au moins une unité de régulation (20) destinée à réguler la température de l'une ou de l'au moins une unité de chauffage (16).

10. Procédé de vulcanisation d'un pneu de véhicule, comprenant les étapes suivantes :
- fourniture d'une ébauche (12) d'un pneumatique de véhicule dans une unité de vulcanisation telle que définie dans l'une des revendications précédentes,
- chauffage de l'ébauche (12) avec au moins une unité de chauffage (16) régulable pour un élément de formage latéral (19) de l'unité de vulcanisation
et
- transformation ultérieure de l'ébauche (12) en un pneu de véhicule.

11. Utilisation d'au moins une unité de chauffage (16) régulable pour réguler la température dans une unité de vulcanisation pour la vulcanisation d'un pneu de véhicule, l'unité de chauffage (16) régulable étant disposée dans le support de moule (10) de l'unité de vulcanisation, l'unité de chauffage (16) régulable étant disposée en vue de chauffer un élément de formage latéral (19) d'une unité de vulcanisation.
